**Europäisches Patentamt**

**European Patent Office**

**Office européen des brevets**

(11) Veröffentlichungsnummer: **0 052 162**

**A1**

(12) **EUROPÄISCHE PATENTANMELDUNG**

(21) Anmeldenummer: **80107180.4**

(22) Anmeldetag: **19.11.80**

(51) Int. Cl.³: **F 01 C 1/344**

(43) Veröffentlichungstag der Anmeldung:
**26.05.82 Patentblatt 82/21**

(84) Benannte Vertragsstaaten:
**AT DE FR GB IT**

(71) Anmelder: **Charwat, Erich**
**Kernstrasse 2/5**
**A-1120 Wien(AT)**

(72) Erfinder: **Charwat, Erich**
**Kernstrasse 2/5**
**A-1120 Wien(AT)**

(54) **Drehkolbenmaschine mit gleitenden Schiebern zum Betrieb mit expandierenden Gasen.**

(57) Bei dieser Maschine sind Schieber (5,6,7) so in einer drehbaren Trommel (4) gelagert, daß sie gleichzeitig um die Drehachse rotieren und um diese in Längsrichtung schwingen, wobei sie in einem Gehäuse verschiedene Gasräume variabler Größe voneinander trennen. Das Gehäuse besteht aus den planen Grund- und Deckplatten (1, 2) und einer diese verbindenden, zwischen diesen senkrecht stehenden geschwungenen Wand (3), welche an drei Punkten (12) die zentrale Trommel (4) tangential oder kurz anschmiegend berührt und an drei diesen gegenüberliegenden Punkten (13) maximal von ihr entfernt ist. Der Durchmesser des Gehäuses, gemessen durch die Drehachse, ist immer gleich der Länge der Schieber (5,6,7).

Durch Druck des Gases auf den aus der Trommel (4) hervorstehenden Teil der Schieber (5,6,7) wird die Trommel (4) und damit die an ihr befestigte Antriebswelle in Rotation versetzt. Zur Steuerung des Zu- und Abstroms des Gases dienen Bohrungen bzw. Einkerbungen (14, 15) in Trommel (4) sowie Oeffnungen (9, 10, 11) in den Platten (1, 2), welche abwechselnd rechtzeitig die Gaswege freigeben.

Fig. 1

-1-

## Drehkolbenmaschine mit gleitenden Schiebern zum Betrieb mit expandierenden Gasen.

Die Erfindung bezieht sich auf eine Kraftmaschine für Fahrzeuge und verschiedene andere Zwecke zum Betrieb mit expandierenden Gasen wie Dampf, Druckluft, Verbrennungsgase usw., die auch als Kompressor oder Pumpe verwendbar ist; dabei treiben die unter Druck stehenden Gase eine Welle an über Schieber, welche in einem Gehäuse mit Ausbuchtungen rotieren und gleichzeitig hin und her schwingen, wodurch sie Räume veränderlichen Volumens bilden.

Es sind Antriebsmaschinen für den Betrieb durch expandierende Gase bekannt, welche durch Kolben, die in Zylindern linear schwingen, den Gasdruck über Pleuelstangen auf die Antriebswelle übertragen und damit in Rotation umwandeln.

Es sind weiters Antriebsmaschinen bekannt, bei denen die Gase einen dreieckigen Kolben antreiben, der in einem trochoidförmigen Gehäuse rotiert und gleichzeitig schwingt.
Schließlich sind Rotationsmotoren bekannt, bei welchen die Gase tangential zur Drehrichtung angreifen. Bei diesen dienen komplizierte Mechanismen, wie zB. Zahnräder, durch Federn gespannte Schieber oder hin- und herklappende Bauteile, dazu, die einzelnen Gasräume voneinander zu trennen und abzudichten.

Bei allen diesen Maschinen existieren große hin- und herschwingende Massen, welche durch ihre Unwucht die Maschine in stoßende Bewegung versetzen, wodurch einerseits die Laufruhe dieser Motoren beeinträchtigt wird und andererseits die Lager und Befestigungen stark beansprucht und abgenutzt werden. Außerdem geht ein erheblicher Teil der aufgewandten Energie dadurch verloren, daß diese Massen immer hin und zurück beschleunigt werden müssen.

Bei jenen vorher erwähnten Maschinen, welche die Energie der Gase zumindest teilweise direkt in Rotation umwandeln, gibt es zum einen ebenfalls nicht ausgeglichene schwingende Massen, zum anderen steht bei diesen das Problem der Dichtung im Vordergrund. Bei diesen Maschinen muß nämlich immer wieder eine unterschiedliche Distanz zwischen den bewegten Teilen und dem feststehenden Gehäuse überbrückt werden, wofür komplizierte Mechanismen nötig sind. Dadurch werden diese Maschinen jedoch störanfällig und teuer in der Herstellung. Außerdem verbrauchen diese Maschinen durch Reibung und zum Teil zur Beschleunigung hin und her schwingender großer Massen zusätzlich Energie, wodurch der Vorteil der direkten Umwandlung des Gasdrucks in Rotation wieder zunichte gemacht wird. Aus allen diesen Gründen konnten sich Rotationsmotoren mit wenigen Ausnahmen im praktischen Betrieb bisher nicht durchsetzen.

Hinzu kommt, daß bei den bekannten Maschinen zum betrieb mit Dampf oder Druckluft meist komplizierte Steuereinrichtungen mit Ventilen und Stuerschiebern notwendig sind, um den Ablauf der Einström- und Auspuffvorgänge zu lenken. Auch diese Mechanismen haben wiederum die Nachteile großer Reibung und großer schwingender Massen, wodurch der Wirkungsgrad der Kraftmaschine absinkt. Außerdem wird dadurch die ganze Maschine teurer und störanfälliger. Weiters ist bei den bekannten Maschinen die Zahl der Arbeitstakte pro Umdrehung gering, sodaß zur Erreichung einer ausreichenden Zahl von Arbeitstakten in der Zeit eine große Umdrehungszahl notwendig ist.

Schließlich ist zu erwähnen, daß bei allen bekannten Maschinen ein sogenannter Toter Punkt existiert, welcher nur mit Schwungkraft oder durch versetzte Anordnung mehrerer Einheiten, zB. mehrerer Zylinder, überwunden werden kann.

Hier soll die Erfindung wesentliche Verbesserungen bringen. Die Antriebsmaschine, welche Gegenstand der Erfindung ist, wandelt den Druck von Gasen direkt in eine rotierende Bewegung um, wobei der Druck immer genau in tangentialer Richtung zur Drehbewegung wirkt. Die notwendigen schwingenden Massen sind bei der Erfindung besonders klein, außerdemkompensieren sich die Unwuchten von selbst vollkommen, sodaß eine rüttelnde Bewegung der ganzen Maschine ausgeschlossen ist. Durch die besondere Form des Gehäuses ist die Trennung der gasräume voneinander und die Abdichtung von selber gegeben, ohne daß irgendwelche zusätzlichen Mechanismen dadurch erforderlich wären.

Weiters ist bei jener Ausführung der Maschine, welche zum Betrieb mir hochgespannten Gaseh, die von außen zugeführt werden, bestimmt ist, eine einfache Selbststeuerung ganz ohne zusätzliche bewegte Teile möglich. Hinzu kommt, daß bei der Erfindung während jeder Umdrehung eine große Zahl von Arbeitstakten stattfindet. Auch dadurch wird die Maschine besonders laufruhig. Außerdem ist die Zahl jener Bewegungsvorgänge, während derer keine Arbeit vollbracht wird, sehr gering. Weiters kann durch die große Zahl von Arbeitstakten pro Umdrehung die Tourenzahl niedrig gehalten werden, was sich günstig auf Schmierung und Lebensdauer auswirkt.

Die durch die Erfindung erreichten Vorteile sind im wesentlichen in folgenden Punkten zu sehen:

1. Der Aufbau der Maschine ist sehr einfach, die Zahl der bewegten Teile ist minimal. Dadurch können einerseits die Herstellungskosten niedrig gehalten werden, andererseits ist die Abnutzung und die Gefahr von Betriebsstörungen besonders gering.

2. Auch durch die mögliche niedrige Drehzahl ist die Abnutzung gering, außerdem sind die Ansprüche an eine gute Schmierung niedrig, was wieder zu einer großen Betriebssicherheit führt.

3. Durch die selbsttätige Kompensation der Unwuchten ist die Laufruhe besonders gut

4. Durch die Tangentiale Wirkung des Gasdrucks, durch die niedrige Zahl bewegter Teile und die dadurch geringe Reibung ist der Wirkungsgrad besonders hoch.

5. Es gibt keinen Totpunkt.

Im folgenden wird die Erfindung anhand von schematisierten Zeichnungen erläutert, welche lediglich eine mögliche Ausführung zeigen.

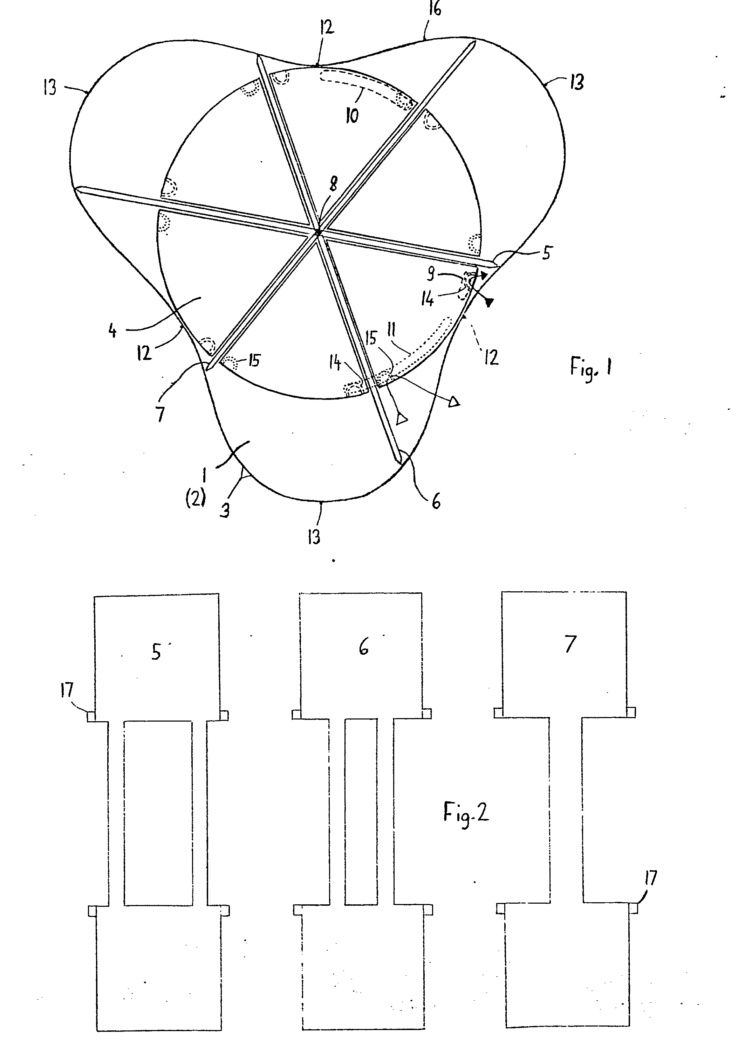

Figur 1 zeigt eine Aufsicht der Maschine. Deckplatte (2) ist durchsichtig gedacht. Zur Vereinfachung sind die Oeffnungen (9, 1o, 11) nur je einmal eingezeichnet, obwohl sie je drei mal vorkommen. Die Drehachse verläuft vertikal durch (8).

Die Oeffnungen (9) in der Grundplatte (1) für die Zuleitung des gespannten Gases sind strichliert, ebenso die Oeffnungen (1o) in der Platte (1) für den Austritt der entspannten Gase. Die Oeffnungen (11) in der Deckplatte (2) zum Austritt des Gases sind punktiert. Die Kerben in den Kanten der Trommel (4) sind mit doppelten Linien kenntlich gemacht, und zwar Kerben (14) in der Unterkante strichliert, Kerben (15) in der Oberkante punktiert. Außerdem ist der Weg des gespannten Gases mit gefüllten Pfeilen, der Weg des entspannten Gases mit leeren Pfeilen dargestellt.

Figur 2 zeigt ein Beispiel, wie die Schieber (5,6,7) gestaltet sein könnten, um im Bereich der Drehachse (8) aneinander vorbeigeführt werden zu können.

In den Zeichnungen ist eine Antriebsmaschine zum Betrieb mit expandierenden Gasen, wie z.B. Dampf, Preßluft, Verbrennungs- und Explosionsgase, dargestellt, welche in ihrem wesentlichen Aufb au aus einem Gehäuse, einer in diesem rotierenden zylindrischen Trommel (4), und aus Schiebern (5,6,7) besteht, welche einerseits mit der Trommel (4) im Gehäuse (1,2,3) rotieren, andererseits auch innerhalb der Trommel (4) um die Achse (8) schwingen.

Das Gehäuse besteht aus je einer planen Grundplatte (1) und Deckplatte (2) und dazwischen einer vertikalen Wand (3), welche in besonderer Form geschwungen ist: An drei Punkten (12), welche je um 120° gegeneinander versetzt sind, nähert sich Wand (3) bis auf jene Entfernung der Drehachse (8), die dem Radius der Trommel (4) entspricht. An drei Punkten (13), welche genau zwischen den Nahpunkten (12) liegen, erreicht Wand (3) die größte Entfernung von Trommel (4), und zwar entspricht diese Entfernung der Länge der Schieber (5,6, 7) minus dem Durchmesser der Trommel (4). Zwischen den Punkten (12) und (13) verläuft Wand (3) so, daß der Durchmesser des Gehäuses, gemessen durch die Achse (8) immer konstant ist und der Länge eines Schiebers (5, 6,7) entspricht. Dies bewirkt, daß ein Schieber (5,6, 7), welcher um die Achse (8) rotieren und gleichzeitig um diese schwingen kann, immer an beiden Enden Wand (3) berührt.

Die Trommel (4) wird erfindungsgemäß an drei Punkten (12) von Wand (3) tangential oder kurz streifend berührt, an den diesen gegenüberliegenden Punkten (13) ist Wand (3) also am weitesten von Trommel (4) entfernt.

Die Trommel (4) dient folgenden Zwecken:

1. Sie führt die Schieber (5,6,7) in ihrer rotierenden und schwingenden Bewegung.

2. Sie nimmt die von den Schiebern (5,6,7) kommenden Druckkräfte der Gase auf, und teilt sie der Antriebswelle mit, welche bei (8) ansetzt.

3. Sie dichtet die Gasräume an den Punkten (12) gegeneinander ab.

4. Zur Selbststeuerung sind in den Kanten der Trommel (4) Kerben oder schräge Bohrungen (14,15) angebracht, welche zum richtigen Zeitpunkt die in den Platten (1,2) befindlichen Oeffnungen freigeben.

-6-

In der nun folgenden Beschreibung der Funktion ist angenommen, daß drei Schieber (5,6,7) verwendet werden,
welche also um je 2x60° versetzt in Schlitzen der Trommel (4) angeordnet sind. Als Drehsinn wurde die Richtung gegen den Uhrzeigersinn gewählt.

Sobald die Spitze eines Schiebers (5,6,7) an einem
Punkt (12) vorbeigewandert ist, gibt die in unmittelbarer Nähe des Schiebers in der Unterkante der Trommel (4) gelegene Kerbe (14) die in der unteren Platte
(1) befindliche Mündung (9) der Gaszuleitung frei. Dadurch strömt das gespannte Treibgas in die kleine Kammer ein, welche vom Schieber, dem Gehäuse (1,2,3) und
der Trommel (4) gebildet wird. Der Druck des Gases bewirkt, daß der Schieber (zB. 5) sich in der vorgegebenen Richtung weiterbewegt und dabei auch Trommel (4)
dreht. Dadurch wird auch Kerbe (14) weiterbewegt und
diese verläßt nun Einströmöffnung (9), der Zustrom
von Treibgas ist hiermit unterbunden. Die weitere
Kraftentfaltung geschieht ab nun nur noch durch den
Eigendruck des Gases, welches sich immer mehr entspannt, je größer der ihm zur Verfügung stehende Raum
wird.

Nach einer Drehung von 60° erreicht die Spitze von
Schieber (5) Punkt (13) und Schieber (6) erreicht
Punkt (12). Noch immer aber treibt das Gas den Schieber (5) an, wenn auch ab diesem Zeitpunkt der Druck
auch gegen die Drehrichtung auf Schieber (6) wirkt.
Erst wenn Schieber (5) Punkt (16) erreicht, sind die
Flächen, welche die Schieber (5) und (6) dem Gas darbieten, gleich groß, sodaß die Bewegung aufhören würde. Knapp bevor jedoch dieser Zustand erreicht ist,
gibt Kerbe (14) Oeffnung (10) frei, durch welche das
entspannte Gas während der nun folgenden Drehbewegung ausströmen kann. Oeffnung (10) beginnt bei (16)
und endet knapp vor (12).

-7-

Bereits bevor aber das Gas seine Ausdehnung beendet hat und auszuströmen beginnt, erreicht der nächste Schieber" (6) mit der neben ihm befindlichen nächsten Kerbe (14) die Oeffnung (9), wieder strömt Frischgas ein; die Bewegung wird also fortgesetzt, und auch Schieber (5) wird weiter bewegt, bis er den nächsten Punkt (12) erreicht usw. Damit der letzte Rest verbrauchten Gases aus dem hinter Schieber (5) befindlichen Raum entweichen kann, ist noch eine Kerbe (15) in der Oberkante der Trommel (4) erforderlich, welche zum richtigen Zeitpunkt eine längliche Oeffnung (11) in der oberen Platte (2) freigibt.

Durch die Tatsache, daß noch vor Beendigung eines Arbeitstaktes der nächste beginnt, gibt es bei der Maschine keinen Totpunkt und ist ein besonders ruhiger Lauf mit gleichmäßiger Kraftentfaltung gewährleistet. Dadurch, daß die Schieber (5,6,7) jeweils symmetrisch um 12o Grad versetzt dieselbe Bewegung ausführen, kommt es auch zu keiner rüttelnden Bewegung nach außen, da einander die Stöße gegenseitig kompensieren.

Wichtig bei der Ausführung der Maschine ist, daß die Wand (3) sich in den Punkten (12) so an die Trommel (4) schmiegt, daß ein Uebertreten von Gasen aus einem Raum in den anderen durch eine Kerbe (14, 15) vermieden wird. Der Schlitz in der Trommel (4) für die Aufnahme eines Schiebers (5,6,7) muß so eng sein, daß zwischen Schieber und Trommel kein Gas austreten kann.

Varianten in der Ausführung und in der Verwendung der Maschine sind in vielfältiger Weise möglich, wie die folgende Aufstellung ohne Anspruch auf Vollständigkeit zeigt:

Kompressor: Um die Erfindung als Kompressor für irgendwelche Gase verwenden zu können, muß bei der oben beschriebenen Ausführung lediglich die Laufrichtung umgekehrt werden.

Pumpe: Um die Maschine als Pumpe für Flüssigkeiten verwenden zu können, muß die Anordnung der Oeffnungen

-8-

in den Platten (1, 2) so abgeändert werden, daß sofort nach dem Einströmen die Auslaßöffnungen frei werden, da Flüssigkeiten weder dehnbar noch komprimierbar sind.

Explosions- bzw Verbrennungsmotor: Um die Maschine als Verbrennungskraftmaschine betreiben zu können, muß statt gespanntem Dampf o.ä. Preßluft als Oxydationsmittel sowie Treibstoff zugeführt werden. Die Druckluft könnte zweckmässigerweise von einem Apparat bereitet werden, der in der oben beschriebenen Weise als Kompressor ausgeführt ist und der direkt mit der Antriebswelle der Maschine verbunden ist. Auch in diesem Fall wäre der Aufwand gegenüber herkömmlichen Verbrennungsmotoren besonders gering, da keine Ventile benötigt werden. Treibstoff müßte mit einer Einspritzpumpe zugeführt werden. Zur noch besseren Ausnutzung des Energiegehalts des Treibstoffs könnte zusätzlich auch noch Wasser in die heißen Verbrennungsgase eingespritzt werden, durch dessen Verdampfung eine weitere Drucksteigerung zu erreichen wäre.

Ebenso ist es möglich, Luft und Treibstoff bereits außerhalb der Maschine zur Reaktion zu bringen, und dann erst die Verbrennungsgase in die Maschine einzubringen, oder auch Luft und Treibstoff außen zu mischen und dann innerhalb der Maschine zu zünden.

Für bestimmte Anforderungen könnte schließlich die Zahl der Ausbuchtungen (13) der Wand (3) vergrößert und unabhängig davon auch die Zahl der Schieber (5,6, 7) vergrößert werden.

Schließlich könnte in einfacher Weise eine Führung für die Schieber (5,6,7), die sonst an der Wand (3) entlanggleiten, eingerichtet werden, um die Reibung am Gehäuse in den Umkehrpunkten (13) und danach zu beseitigen. Zu diesem Zweck müßten die Schieber (5,6,7) lediglich mit seitlichen Zapfen (17) versehen werden, welche in zwei entsprechend der Form des Gehäuses in den Platten (1, 2) angebrachten Nuten laufen.

-9-

Patentansprüche

1. Drehkolbenmaschine mit gleitenden Schiebern zum Betrieb mit expandierenden Gasen, wie Dampf, Preßluft, Verbrennungsgase usw., bestehend aus einer zylindrischen Trommel (4), welche in einem Gehäuse rotiert, das aus je einer Grund- und Deckplatte (1,2) und einer dazwischen stehenden Wand (3) zusammengesetzt ist, die senkrecht zu den Platten (1,2) steht und in der Weise geschwungen ist, daß sie an drei oder mehr Stellen (12) die Trommel (4) tangential oder kurz anschmiegend berührt und an ebensovielen Punkten (13), welche den Punkten (12) gegenüber liegen, ihre größte Entfernung von der Trommel (4) erreicht, sowie aus drei oder mehr Schiebern (5,6,7), welche, von Trommel (4) geführt, rotieren und gleichzeitig um den Mittelpunkt (8) schwingen, wobei diese Schieber gerade so lang sind, daß sie immer an beiden Enden Wand (3) berühren. Bei umgekehrter Laufrichtung auch als Kompressor verwendbar.

2. Einrichtung zur einfachen Steuerung der Maschine nach Anspruch 1, bestehend aus Einkerbungen oder schrägen Bohrungen (15, 16) in den Kanten der Trommel (4) sowie Oeffnungen (9, 1o, 11) in den Deckplatten (1, 2), durch welche zum richtigen Zeitpunkt das gespannte Gas einströmen und danach das entspannte Gas wieder austreten kann.

3. Anordnung zweier Maschinen nach Anspruch 1 für die Verwendung als Verbrennungsmotor, wovon die eine als Kompressor wirkt und die andere mit Luft für die Verbrennung versorgt.

- 1/1 -

Fig. 1

Fig-2

Europäisches
Patentamt      **EUROPÄISCHER RECHERCHENBERICHT**

| | **EINSCHLÄGIGE DOKUMENTE** | | | KLASSIFIKATION DER ANMELDUNG (Int Cl ¹) |
|---|---|---|---|---|
| Kategorie | Kennzeichnung des Dokuments mit Angabe, soweit erforderlich, der maßgeblichen Teile | | betrifft Anspruch | |
| X | DE - A - 2 125 516 (STEINER) <br><br> * Seite 1, Zeilen 15 bis 24; Figuren * <br><br> -- | | 1 | F 01 C 1/344 //F 02 B 55/16 |
| X | US - A - 3 152 582 (LARCHER) <br><br> * Spalte 2, zwei letzte Absätze; Figuren 1,2; Spalte 3, Figur 3; Spalte 4, erster und letzter Abschnitt; Spalte 5 * <br><br> -- | | 1,2,3 | |
| X | CH - A - 369 023 (FRASER) <br><br> * Seite 2, Zeilen 76 bis 91; Figuren 1,2,3; Seite 4, linke Spalte, Absatz 2; Figuren 12, 13 * <br><br> -- | | 1,2 | RECHERCHIERTE SACHGEBIETE (Int Cl.³) <br><br> F 01 C <br> F 02 B |
| X | US - A - 1 792 026 (NICHOLS) <br><br> * Seite 1, Zeile 76 bis am Ende; Seite 2, Zeilen 39 bis 110 und 119 bis Seite 3, Zeile 12; Figuren 1,2,5 bis 8 * <br><br> -- | | 2,3 | |
| X | US - A - 3 205 875 (PRAXMARER) <br><br> * Spalte 3, Zeilen 39 bis 66; Figuren 1,2,3,4,8; Spalte 4; Spalte 5, Absatz 1; Figur 10 * <br><br> -- <br><br> ../. | | 2 | KATEGORIE DER GENANNTEN DOKUMENTE <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument |

Der vorliegende Recherchenbericht wurde für alle Patentansprüche erstellt.

&: Mitglied der gleichen Patentfamilie, übereinstimmendes Dokument

| Recherchenort | Abschlußdatum der Recherche | Prüfer |
|---|---|---|
| Den Haag | 25.11.1981 | KAPOULAS |

EPA form 1503.1   06.78

**Europäisches Patentamt**

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | US - A - 3 187 507 (ARTAJO) <br><br> * Spalte 2, zwei letzte Absätze; Spalte 3, Absatz 1; Figuren 1,5,7 * <br><br> -- <br><br> US - A - 3 202 142 (LOCKHART) <br><br> * Spalte 2, Zeilen 58,59; Spalte 3, Zeilen 47 bis 55 und 73,74; Figuren 3,4,5 * <br><br> ------- | 2 <br><br><br><br><br><br><br> 2 | |

RECHERCHIERTE SACHGEBIETE (Int. Cl.³)

EPA Form 1503.2   06.78